# EUROPÄISCHE PATENTSCHRIFT

(11) **EP 2 232 107 B1**
(45) Veröffentlichungstag und Bekanntmachung des Hinweises auf die Patenterteilung: **25.01.2012**
(21) Anmeldenummer: 08870758.3
(22) Anmeldetag: 08.12.2008
(51) Int. Cl.: F16H 63/20, F16H 63/32, F16H 63/34, F16H 61/30

(54) **SCHALTVORRICHTUNG FÜR MEHRSTUFENSCHALTGETRIEBE VON KRAFTFAHRZEUGEN**
SHIFTING ARRANGEMENT FOR MULTI-STAGE MANUAL TRANSMISSIONS OF MOTOR VEHICLES
DISPOSITIF DE CHANGEMENT DE VITESSE POUR BOÎTES DE VITESSES À PLUSIEURS ÉTAGES DE VÉHICULES AUTOMOBILES

(30) Priorität: 17.01.2008 DE 102008000072
(43) Veröffentlichungstag der Anmeldung: 29.09.2010
(73) Patentinhaber: ZF Friedrichshafen AG, 88038 Friedrichshafen (DE)
(72) Erfinder: MILLER, Martin, 88090 Immenstaad (DE); AMANN, Jörg, 88094 Oberteuringen (DE); GRAF, Andreas, 78333 Stockach - Wahlwies (DE)
(86) Internationale Anmeldenummer: PCT/EP2008/066976
(87) Internationale Veröffentlichungsnummer: WO 2009/089963

(56) Entgegenhaltungen:
- EP-B- 0 395 241
- DE-A1- 19 843 584
- DE-A1-102005 021 944
- DE-B- 1 038 861
- US-A- 4 070 914
- US-A- 4 621 537

## Beschreibung

Die vorliegende Erfindung betrifft eine Schaltvorrichtung für die Wähl- und Schaltbetätigung von Mehrstufenschaltgetrieben insbesondere in Kraftfahrzeugen mit den Merkmalen des Oberbegriffs von Anspruch 1.

In Fahrzeugen werden sowohl in Handschaltgetrieben, wie auch in automatisierten Getrieben in großem Umfang Schaltvorrichtungen eingesetzt, bei denen die zum gewünschten Gang gehörigen Komponenten des Antriebsstranges durch das Verschieben einer Schaltmuffe kraft- bzw. drehmomentübertragend miteinander verbunden werden. Dabei greift eine Schaltgabel oder Schaltschwinge in eine aussenliegende Umfangsnut der axial verschiebbaren Schaltmuffe ein und eine am Innenumfang der Schaltmuffe liegende Verzahnung stellt beim Einlegen eines Ganges eine formschlüssige Verbindung zwischen dem zugehörigen Losrad und einer Getriebewelle her.

Der gesamte Schaltvorgang umfasst dabei in der Regel zwei Bewegungen, nämlich eine Wählbewegung und eine Schaltbewegung. Mit der Wählbewegung wird eine bestimmte Schaltgabel ausgewählt, die zum Einlegen des neuen Ganges verschoben werden soll. Dieser Vorgang wird auch als Gassenwahl bezeichnet. Mit der Schaltbewegung wird dann die ausgewählte Schaltgabel und mit ihr die dazugehörige Schaltmuffe verschoben. Dadurch ist der Kraftfluß mit der gewünschten Übersetzung im Antriebsstrang hergestellt und der neue Gang eingelegt.

Es gibt Schaltvorrichtungen mit je einer Schaltstange für eine Schaltgabel. Bei diesen Schaltvorrichtungen ist die Schaltgabel starr mit der jeweiligen Schaltstange verbunden. Durch die Wählbewegung wird ein Mitnahmeelement, welches wiederum starr mit der zugehörigen Schaltstange verbunden ist, ausgewählt, indem ein Schaltfinger in die Mitnahmeposition des gewünschten Mitnahmeelementes bewegt wird. Bei der nachfolgenden Schaltbewegung wird die starre Einheit aus Mitnahmeelement, Schaltstange, Schaltgabel und die Schaltmuffe axial verschoben. Ausführungsbeispiele dieser Art von Schaltvorrichtungen sind beispielsweise aus der WO 2007/065611 A1 und aus der DE 10 2005 000 886 A1 bekannt. Bei diesen Ausführungen sind ein relativ großer Bauraum und viele Bauteile erforderlich, weil jeder Schaltmuffe und Schaltgabel eine separate Schaltstange zugeordnet ist, wobei jede Schaltstange axialen Bewegungsraum erfordert.

Andere Schaltvorrichtungen werden deshalb so ausgeführt, dass alle Schaltgabeln des Getriebes axial verschiebbar auf nur einer Schaltstange angeordnet sind. Dadurch besteht ein geringerer Bauraum- und Bauteilbedarf und die Masse des gesamten Getriebes ist reduziert. Eine derartige Lösung ist aus der DE 11 2005 001 381 T5 bekannt. Dabei wird durch eine Wählbewegung die für den gewünschten Gang zu schaltende Schaltgabel formschlüssig mit der Schaltstange verbunden, während die nicht angewählten Schaftgabeln auf der Schaltstange axial verschiebbar bleiben. Die nachfolgende Schaltbewegung erfolgt durch das axiale Verschieben der einen Schaltstange, wodurch die angewählte Schaltgabel über die formschlüssige Verbindung mit verschoben wird, während die nicht angewählten Schaltgabeln in ihrer Position stehen bleiben. Die verschobene Schaltgabel stellt über die ihr zugeordnete Schaltmuffe die drehmomentübertragende Verbindung in der entsprechenden Übersetzung her, d. h. der gewünschte Gang ist eingelegt.
Bei der Ausführung gemäß der DE 11 2005 001 381 T5 ist jedoch ein großer Bauraum für Auswahl- und Führungselemente erforderlich.

Weitere Schaltvorrichtungen gemäß dem Oberbegriff des Anspruches 1 sind aus den Schriften US 4621537 A, EP 0395241 B und DE 19843584 A1 bekannt. Auch bei diesen Schaltvorrichtungen ist ein großer Bauraum für Auswahl- und Führungselemente erforderlich.

Aufgabe der vorliegenden Erfindung ist es, eine Schaltvorrichtung der vorgenannten Art zu schaffen, die mit geringem Bauaufwand, geringem Bauraumbedarf und einer einfachen Steuerung ein sicheres Umschalten der Gänge gewährleistet.

Diese Aufgabe wird durch eine Schaltvorrichtung mit den Merkmalen des Anspruchs 1 gelöst. Vorteilhafte Weiterbildungen der erfindungsgemäßen Vorrichtung sind in den abhängigen Ansprüchen beansprucht.
Die erfindungsgemäße Schaltvorrichtung für die Wähl- und Schaltbetätigung von Mehrstufenschaltgetrieben von Kraftfahrzeugen weist eine entlang einer Mittelachse verschiebbare, wenigstens zwei Schaltgabeln tragende Schaltstange auf, wobei zur Gangwahl jeweils eine der Schaltgabeln mittels einer Wählstange und ersten Formschlusselementen mit der Schaltstange formschlüssig verbindbar ist, und wobei die Mittelachse der Wählstange in der gleichen Richtung wie die Mittelachse der Schaltstange angeordnet ist. Erfindungsgemäß ist die Wählstange koaxial zur Schaltstange angeordnet. Durch diese Anordnung der Wählstange im Bezug auf die Schaltstange wird der erforderliche Bauraum deutlich kleiner.

Eine besonders bevorzugte Ausführung ist dadurch gekennzeichnet, dass die Schaltstange als Hohlwelle ausgebildet ist, und dass die Wählstange in der Hohlwelle dreh- oder schwenkbar um ihre Mittelachse angeordnet ist. Bei einer anderen bevorzugten Ausführung ist die Schaltstange als Hohlwelle ausgebildet und die Wählstange ist in der Hohlwelle axial verschiebbar angeordnet.

Beide letztgenannten Ausführungen zeichnen sich durch eine weitere Reduzierung des benötigten Bauraumes aus. Die Anzahl der Bauteile der gesamten Schaltvorrichtung ist ebenfalls geringer als bei den bekannten Ausführungen aus dem Stand der Technik.

Vorzugsweise ist die Wählstange mit Funktionsflächen versehen, die mit den ersten Formschlusselementen zusammenwirken, sodass durch Verdrehen oder axiales Verschieben der Wählstange die ersten Formschlusselemente radial verschiebbar sind und so der Formschluss zwischen Schaltstange und Schaltgabeln über die ersten Formschlusselemente herstellbar ist. D. h. die Gassenwahl erfolgt bei der vorliegenden Erfindung durch die Wählstange, die in der hohlen Schaltstange geführt und gegenüber dieser verdrehbar oder axial verschiebbar ist. Die Außenkontur der Wählstange ist so ausgebildet, dass in Abhängigkeit der Stellung der Wählstange die ersten Formschlusselemente radial in zugeordnete Ausnehmungen in der entsprechenden Schaltgabel geschoben werden.
Die Funktionsflächen werden beispielsweise durch an der Mantelfläche der zylinderförmigen Wählstange angeordnete Nuten mit variabler Tiefe gebildet, in denen die ersten Formschlusselemente beim Verdrehen oder beim axialen Verschieben der Wählstange gleiten. Dabei werden die ersten Formschlusselemente wegen des variablen Tiefenverlaufes der Nut oder Ausnehmung in radialer Richtung verschoben, sodass eine formschlüssige Verbindung zwischen Schaltstange und Schaltgabel entsteht. Bei einer verdrehbaren Wählstange verläuft die Nut mit variabler Tiefe in Umfangsrichtung. Bei einer axial verschiebbaren Wählstange verläuft die Nut mit variabler Tiefe in Richtung der gemeinsamen Mittelachse von Schaltstange und Wählstange.

Bei der Ausführung mit der axial verschiebbaren Wählstange können die Funktionsflächen auch durch Wülste am Umfang der Wählstange gebildet sein, auf denen die ersten Formschlusselemente beim axialen Verschieben der Wählstange gleiten. So kann die Wählstange als Hohlwelle bzw. als Rohr ausgeführt sein, bei dem die Wülste in Kaltverformverfahren ausgebildet wurden. Eine andere Möglichkeit zur Ausbildung der Funktionsflächen an der Wählstange ist eine Ausführung der Wählstange als Drehteil mit unterschiedlichen Durchmessern über dessen Länge, wobei die unterschiedlichen Wählstangendurchmesser beim axialen Verschieben der Wählstange bewirken, dass die an der Wählstange anliegenden ersten Formschlusselemente in radialer Richtung verschoben werden. Die Übergänge des Wählstangendurchmessers von kleinen auf große Durchmesser, und umgekehrt, können beispielsweise so ausgebildet sein, dass sich kegelstumpfförmige Übergangsbereiche an der Wählstange ergeben, an deren Mantelflächen die ersten Formschlusselemente beim axialen Verschieben der Wählstange entlang gleiten und dabei in radialer Richtung verschoben werden.

Eine weitere bevorzugte Ausführung der erfindungsgemäßen Schaltvorrichtung ist mit einer Sperrvorrichtung zum Halten der nicht ausgewählten Schaltgabeln ausgestattet. Eine solche Sperrvorrichtung sieht vorzugsweise zweite Formschlusselemente vor, mit denen ein Formschluss zwischen der zugehörigen, nicht ausgewählten Schaltgabel und einem ortsfesten Teil herstellbar ist. Die zweiten Formschlusselemente sind dazu durch die axiale Verschiebung der Wählstange zwischen einer Sperrposition und einer Mitnahmeposition verschiebbar, wobei in der Sperrposition ein Formschluss zwischen der Schaltgabel und einem ortsfesten Teil und in der Mitnahmeposition ein Formschluss zwischen der Schaltgabel und der Schaltstange besteht.

Der Formschluss zwischen der Schaltstange und einer Schaltgabel in der Mitnahmeposition wird durch die ersten Formschlusselemente hergestellt, während der Formschluss zwischen einer Schaltgabel und einem ortsfesten Teil in der Sperrposition durch die zweiten Formschlusselemente hergestellt wird.

Um das Umschalten zwischen Mitnahmeposition und Sperrposition zuverlässig zu gewährleisten werden die zweiten Formschlusselemente vorzugsweise durch dieselbe Wählbewegung der Wählstange betätigt wie die ersten Formschlusselemente. D. h. immer wenn ein erstes Formschlusselement von einer Mitnahmeposition in eine Nichtmitnahmeposition bewegt wird, dann wird das dazugehörige zweite Formschlusselement zwangsläufig in die Sperrposition bewegt.
Dadurch wird erreicht, dass sich jede Schaltgabel jederzeit in einer definierten Position befindet. Entweder ist die Schaltgabel formschlüssig mit der Schaltstange verbunden und entsprechend der Schaltstangenposition positioniert, oder die Schaltgabel ist formschlüssig mit einem ortsfesten Teil verbunden und auf der Schaltstange axial frei beweglich. Das ortsfeste Teil kann beispielsweise das Getriebegehäuse sein.

Weitere Aspekte der Erfindung betreffen die Betätigung der Wählstange und der Schaltstange. Dazu sind ein erster Aktuator zur Betätigung der Wählstange und ein zweiter Aktuator zur Betätigung der Schaltstange vorgesehen. In einer möglichen Ausgestaltung sind der erste und der zweite Aktuator im Bereich desselben Endes der Schaltstange angeordnet. In einer anderen möglichen Ausgestaltung ist der erste Aktuator im Bereich des einen Endes der Schaltstange angeordnet und der zweite Aktuator ist im Bereich des anderen Endes der Schaltstange angeordnet.
Die Mehrzahl der möglichen Anordnungen der Aktuatoren eröffnet eine vorteilhafte konstruktive Freiheit, wonach die Aktuatoren je nach Bauraumanforderungen, Getriebekonfiguration und Umgebungsbedingungen angeordnet werden können, ohne die Funktion der Schaltvorrichtung einzuschränken.

Die erfindungsgemäße Schaltvorrichtung lässt sich mit verschiedenen Arten von Aktuatoren sowohl für die Schaltstange, als auch für die Wählstange betreiben. Die Schaltstange und die Wählstange können beispielsweise pneumatisch, elektromotorisch, hydraulisch, manuell oder mit einem Elektromagneten betätigt werden. Einfache Aktuatoren mit nur zwei Schaltstellungen können beispielsweise bei 3- oder 4-Gang-Getrieben für die Betätigung der Wählstange verwendet werden, weil dabei in der Regel nur zwei Endstellungen der Wählstange einstellbar sein müssen.
Vorzugsweise sind der erste und der zweite Aktuator elektronisch ansteuerbar und mit einer Steuereinheit signalübertragend verbunden. Bei der Steuereinheit kann es sich um eine zentrale Steuereinheit des Kraftfahrzeuges oder um eine lokale Steuereinheit handeln, die beispielsweise direkt dem Getriebe zugeordnet ist.

Die beschriebenen Merkmale und weitere Vorteile sind in der nachfolgenden Beschreibung des in den Figuren dargestellten Ausführungsbeispieles und in den Figuren selber verdeutlicht.

Es zeigen:
- Fig. 1: ein Ausführungsbeispiel der erfindungsgemäßen Schaltvorrichtung in schematischer Darstellung;
- Fig. 2: die vergrößerte Ansicht eines Ausschnittes aus der Fig. 1 mit der nicht angewählten Schaltgabel;
- Fig. 3A: die schematische Darstellung eines Teils der erfindungsgemäßen Schalteinrichtung in einer Neutralstellung;
- Fig. 3B: die schematische Darstellung aus Fig. 3A in der Schaltstellung für den 1. Gang;
- Fig. 3C: die schematische Darstellung aus Fig. 3A in der Schaltstellung für den 2. Gang;
- Fig. 3D: die schematische Darstellung aus Fig. 3A in der Schaltstellung für den 3. Gang;
- Fig. 3E: die schematische Darstellung aus Fig. 3A in der Schaltstellung für den 4. Gang;
- Fig. 4A: einen Ausschnitt einer erfindungsgemäßen Schaltvorrichtung mit Sperrvorrichtung in der Sperrposition und
- Fig. 4B: einen Ausschnitt einer erfindungsgemäßen Schaltvorrichtung mit Sperrvorrichtung in der Mitnahmeposition.

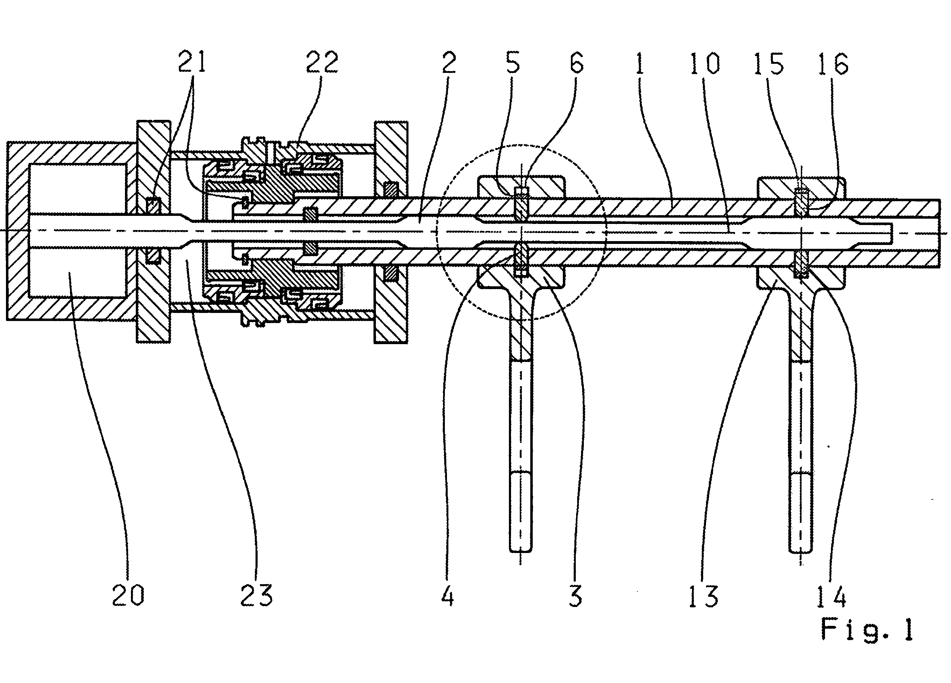

Bei dem in Fig. 1 dargestellten Ausführungsbeispiel der vorliegenden Erfindung ist zentral die Wählstange 2 angeordnet. Die in der Schaltstange 1 geführte und relativ zu dieser verschiebbare Wählstange 2 weist dieselbe Mittelachse 10 auf wie die Schaltstange 1. Die Wählstange 2 und die Schaltstange 1 sind entlang der gemeinsamen Mittelachse 10 unabhängig voneinander verschiebbar.

Die hohle Schaltstange 1 wird mittels eines ersten Aktuators in Form einer pneumatischen Kolben-Zylinder-Einheit 22 entlang der Mittelachse 10 zwischen drei Stellungen verschoben. Dazu sind an der Kolben-Zylinder-Einheit 22 zwei Schalt- und eine dazwischen liegende Neutralstellung vorgesehen.

Die Wählstange 2 ist antriebsseitig entlang der Mittelachse 10 zentral durch einen zylinderförmigen Druckraum 23 der Kolben-Zylinder-Einheit 22 hindurch nach außen geführt. Ein an die Kolben-Zylinder-Einheit 22 anschließend angeordneter zweiter, elektromagnetischer Aktuator 20 betätigt die Wählstange 2, indem er die Wählstange 2 zwischen zwei Stellungen entlang der Mittelachse 10 hin und her verschiebt. An den Ein- und Austrittsstellen der Wählstange 2 zum Druckraum 23 sind Abdichtungen 21 vorgesehen.

Auf der Schaltstange 1 sind die Schaltgabeln 3, 13 verdrehfest und axial verschiebbar gelagert. Jede der beiden Schaltgabeln 3, 13 ist mit der Schaltstange 1 in je drei Stellungen verschiebbar. In dieser Darstellung ist die antriebsseitige Schaltgabel 3 nicht angewählt und die Schaltgabel 13 ist angewählt. D. h. zwischen der Schaltgabel 3 und der Schaltstange 1 besteht keine formschlüssige Verbindung, weil die ersten Formschlusselemente 4 innen am kleinen Durchmesser der Wählstange 2 anstehen und nicht nach außen in die Ausnehmung 6 der Schaltgabel 3 hineinragen. Die in der Ausnehmung 6 angeordnete Ringfeder 5 drückt die ersten Formschlusselemente 4 radial in Richtung Mittelachse 10 in eine Nichtmitnahmeposition. Dagegen besteht zwischen der Schaltgabel 13 und der Schaltstange 1 eine formschlüssige Verbindung über die radial nach außen verschobenen ersten Formschlusselemente 14, die in die Ausnehmung 16 der Schaltgabel 13 hineinragen.

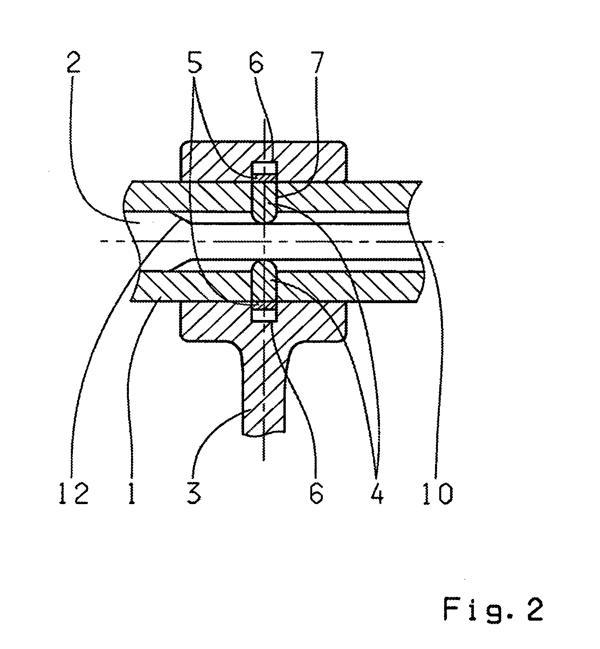

Der in Fig. 2 dargestellte, vergrößerte Ausschnitt aus der Fig. 1 zeigt beispielhaft zwei radial verschiebbar angeordnete erste Formschlusselemente 4, die in je einer Öffnung 7 in der Schaltstange 1 geführt und radial verschiebbar angeordnet sind. Die ersten Formschlusselemente 4 sind als Stift ausgeführt und dienen der formschlüssigen Verbindung zwischen der dazugehörigen Schaltgabel 3 und der Schaltstange 1. Über den Umfang der Schaltstange 1 können im Bereich jeder Schaltgabel 3, 13 ein oder mehrere erste Formschlusselemente 4, 14 angeordnet sein. So können beispielsweise über den Umfang der Schaltstange 1 im Bereich jeder Schaltgabel 3, 13 drei im Abstand von je 120 Grad verteilt angeordnete Öffnungen 7 angeordnet sein, denen jeweils ein erstes Formschlusselement 4, 14 zugeordnet ist. Eine Ringfeder 5 ist derart in der Ausnehmung 6 angeordnet, dass die der Schaltgabel 3 zugehörigen Formschlusselemente 4 von der Ringfeder 5 radial in Richtung Mittelachse 10 gedrückt werden. Die Ausnehmung 6 ist eine, entlang des Innenumfanges der Nabe der Schaltgabel 3 verlaufende, ringförmige Nut. Anstatt einer Ringfeder ist es auch möglich, jedem Formschlusselement eine eigene Schraubendruckfeder zuzuordnen, die in einer eigenen Ausnehmung in Form einer Bohrung in der Nabe der Schaltgabel angeordnet wird und nur das ihr zugeordnete Formschlusselement radial in Richtung der Mittelachse drückt.

Da die Funktion der ersten Formschlusselemente 4, 14 unabhängig von deren Anzahl je Schaltgabel 3, 13 an jedem Formschlusselement 4, 14 gleich ist, wird die Funktion im Folgenden nur anhand eines Formschlusselementes 4 beschrieben.
Das erste Formschlusselement 4 wird beim axialen Verschieben der Wählstange 2 von der Funktionsfläche 12 der Wählstange radial in eine Ausnehmung 6 der dazugehörigen Schaltgabel 3 geschoben. Die in der Ausnehmung 6 angeordnete Ringfeder 5 ist mit dem Formschlusselement 4 derart wirkverbunden, dass das erste Formschlusselement 4 immer an die Wählstange 2 angedrückt wird.

Beim axialen Verschieben der Wählstange 2 aus der in Fig. 2 dargestellten Position nach rechts in eine Mitnahmeposition wird das Formschlusselement 4 von der Funktionsfläche 12 radial nach außen verschoben gegen den Druck der Ringfeder 5. In der äußeren Position bewirkt das Formschlusselement 4 den Formschluss zwischen der Schaltstange 1 und der Schaltgabel 3, sodass die Schaltgabel 3 beim Verschieben der Schaltstange 1 mitgenommen wird und über eine nicht dargestellte Schaltmuffe ein Gang eingelegt wird. Beim axialen Verschieben der Wählstange 2 aus der Mitnahmeposition zurück in die dargestellte Position bewirkt die Ringfeder 5 die Rückstellung des ersten Formschlusselementes 4 in radialer Richtung hin zur Mittelachse 10.

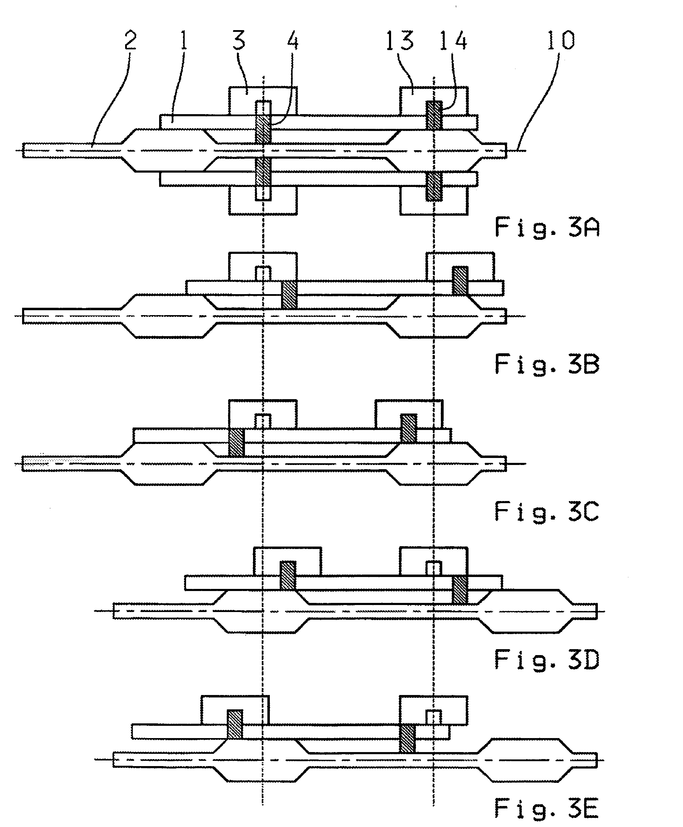

In den Fig. 3A bis 3E sind verschiedene Wähl- und Schaltstellungen einer erfindungsgemäßen Schaltvorrichtung schematisch dargestellt. In den Fig. 3B bis 3E ist zum Zwecke der Übersichtlichkeit nur die obere Hälfte der symmetrischen Bauteile dargestellt.
Über die Schaltgabel 3 werden der dritte und der vierte Gang geschaltet und über die Schaltgabel 13 werden der erste und der zweite Gang geschaltet. In Fig. 3A steht die Schaltstange 1 in der Neutralposition, d.h. es ist kein Gang geschaltet. Die Wählstange 2 steht in einer Position, in der die Schaltgabel 13 angewählt ist. D. h. die Schaltgabel 13 ist über die ersten Formschlusselemente 14 formschlüssig mit der Schaltstange 1 verbunden.

Fig. 3B zeigt die Schaltanordnung mit dem geschalteten ersten Gang. Dazu ist die Schaltstange 1 und mit ihr die Schaltgabel 13 gegenüber ihrer Position in Fig. 3A nach rechts verschoben. Die Wählstange 2 steht in derselben Position wie in Fig. 3A. Es besteht Formschluss zwischen der Schaltgabel 13 und der Schaltstange 1.

Fig. 3C zeigt die Schaltanordnung mit dem geschalteten zweiten Gang. Dazu ist die Schaltstange 1 gegenüber der in Fig. 3A gezeigten Neutralposition nach links verschoben. Die Wählstange 2 steht in derselben Position wie in Fig. 3A. Es besteht Formschluss zwischen der Schaltgabel 13 und der Schaltstange 1.

Fig. 3D zeigt die Schaltanordnung mit dem geschalteten dritten Gang. Dazu ist die Schaltstange 1 gegenüber der in Fig. 3A gezeigten Neutralposition nach rechts verschoben. Die Wählstange 2 ist gegenüber ihrer Position in Fig. 3A nach rechts verschoben. Es besteht Formschluss zwischen der Schaltgabel 3 und der Schaltstange 1. Dagegen ist der Formschluss zwischen der Schaltgabel 13 und der Schaltstange 1 aufgehoben, so dass die Schaltstange 1 relativ zu der Schaltgabel 13 axial verschiebbar ist.

Fig. 3E zeigt die Schaltanordnung mit dem geschalteten vierten Gang.
Dazu ist die Schaltstange 1 gegenüber der in Fig. 3A gezeigten Neutralposition nach links verschoben. Die Wählstange 2 ist gegenüber ihrer Position in Fig. 3A nach rechts verschoben, gegenüber der Position in Fig. 3D aber gleich geblieben. Es besteht Formschluss zwischen der Schaltgabel 3 und der Schaltstange 1.

Die vorliegende Erfindung umfasst auch Schaltvorrichtungen mit mehr als zwei Schaltgabeln oder Schaltschwingen, z. B. für 6-Gang-Getriebe. Dabei ist die Wählstange mit einer entsprechenden Außenkontur versehen, über deren Funktionsflächen eine entsprechende Anzahl an Formschlusselementen für die vorgegebene Anzahl von Schaltgabeln betätigt wird. Des weiteren wird dazu ein Aktuator für die Wählbewegungen der Wählstange vorgesehen, der in der Lage ist, eine Anzahl an verschiedenen Wählstellungen anzusteuern, die zumindest der Anzahl an vorgesehenen Schaltgabeln entspricht.

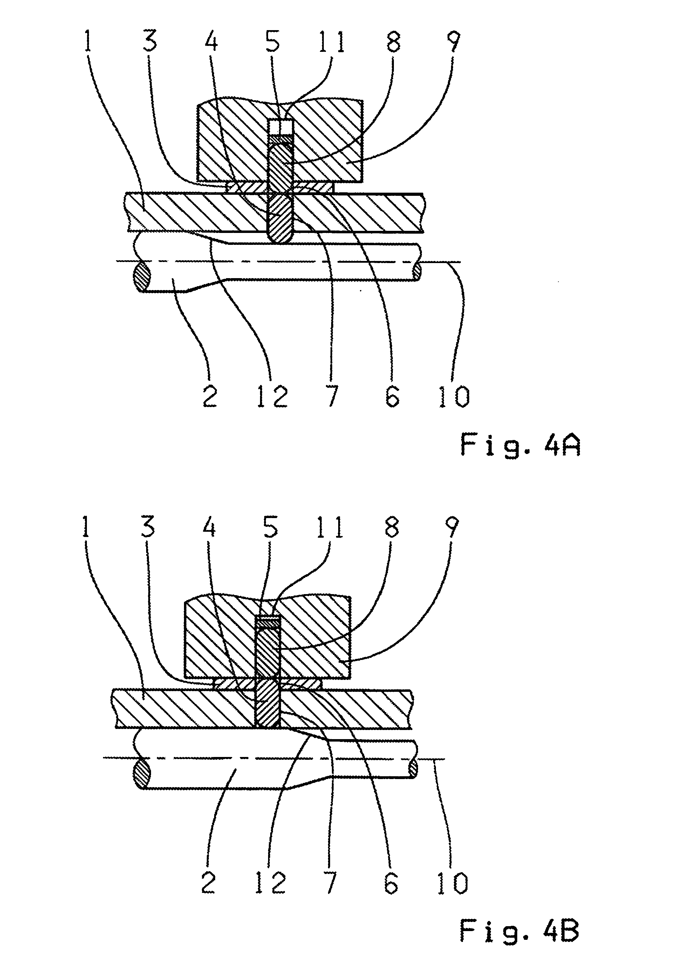

Die Fig. 4A und 4B zeigen schematisch einen Ausschnitt einer erfindungsgemäßen Schalteinrichtung mit einer Sperrvorrichtung gemäß den Ansprüchen 6 bis 8.
Die Funktionsweise und das Zusammenwirken der Schaltstange 1, der Wählstange 2, der Schaltgabel 3 und der ersten Formschlusselemente 4 entspricht im Wesentlichen der Funktionsweise aus der Beschreibung zu den Fig. 1 bis 3. Die Ausnehmung 6 in der Schaltgabel 3 ist im Gegensatz zu den Ausführungen in den Fig. 1 bis 3 jedoch durchgehend, z.B. als Durchgangsbohrung 6 ausgebildet.
Die Sperrvorrichtung wird im Wesentlichen durch zweite Formschlusselemente 8 und durch wenigstens ein ortsfestes Teil 9 gebildet. Die Ringfeder 5 ist in einer Ausnehmung 11 in dem ortsfesten Teil 9 angeordnet und wirkt direkt auf das zweite Formschlusselement 8 und über dieses auch auf das erste Formschlusselement 4.

Die Anzahl an Sperrvorrichtungen 8, 9 an jeder Schaltgabel 3 kann der Anzahl an ersten Formschlusselementen 4 entsprechen, so dass an jedem ersten Formschlusselement 4 ein zweites Formschlusselement 8 anliegt. Es können also über den Umfang der Schaltstange 1 im Bereich jeder Schaltgabel 3, 13 ein oder mehrere Sperrvorrichtungen 8, 9 angeordnet sein.

Es ist jedoch auch möglich, über den Umfang einer Schaltgabel mehrere erste Formschlusselemente 4, 14 entsprechend Fig. 2 anzuordnen und nur bei einem dieser ersten Formschlusselemente 4, 14 eine Sperrvorrichtung 8, 9 entsprechend Fig. 4A vorzusehen. Dabei wird anstatt der Ringfeder 5 zumindest für die Sperrvorrichtung 8, 9 eine Schraubendruckfeder eingesetzt, weil die Feder bei deren zweiten Formschlusselementen 8 weiter außen am Umfang angreifen muss, als bei den ersten Formschlusselementen 4 ohne Sperrvorrichtung 8, 9. Die Formschlusselemente 4, 14, denen keine Sperrvorrichtung 8, 9 zugeordnet ist, können entweder gemeinsam mittels einer teilweise offen stehenden Ringfeder oder einzeln von jeweils einer Schraubendruckfeder radial in Richtung Mittelachse 10 auf die Wählstange 2 gedrückt werden.

So können die Sperrvorrichtungen 8, 9 über den Umfang der Schaltstange 1 verteilt in beliebiger Anzahl und an beliebigen Stellen angeordnet werden. Die Anordnung kann vorteilhaft so gewählt werden, dass als ortsfestes Teil 9 ein bereits vorhandenes Teil des nicht dargestellten Getriebegehäuses genutzt wird, in dem die für die Sperrvorrichtung benötigte Ausnehmung 11 vorgesehen wird.

In Fig. 4A ist die Sperrstellung dargestellt. Die Schaltstange 1 ist gegenüber der formschlüssig mit dem ortsfesten Teil 9 verbundenen Schaltgabel 3 axial verschiebbar. Die Ringfeder 5 drückt das erste Formschlusselement 4 und das zweite Formschlusselement 8 radial in Richtung der Mittelachse 10 auf die Wählstange 2. Beim Verschieben der Schaltstange 1 bleibt die Schaltgabel 3 in dieser Position stehen und die ersten und zweiten Formschlusselemente 4 und 8 werden voneinander weg verschoben. Die Formschlusselemente 4 und 8 sind an ihren Stirnseiten mit einer Phase versehen oder abgerundet, um beim Verschieben ein Verkanten an den Kanten der Öffnung 7 in der Schaltstange 1 und an der Ausnehmung 6 in der Schaltgabel 3 zu vermeiden.

In Fig. 4B ist die Mitnahmestellung dargestellt. Die Schaltgabel 3 ist formschlüssig mit der Schaltstange 1 verbunden und wird von dieser beim axialen Verschieben zum Einlegen eines Ganges mitgenommen. Die Wählstange 2 ist gegenüber ihrer Stellung in Fig. 4A nach rechts verschoben, so dass die Formschlusselemente 4 und 8 von dem Bereich der Wählstange 2 mit dem größeren Durchmesser radial nach außen verschoben sind, gegen den Federdruck der Ringfeder 5.

Das erste Formschlusselement 4 stellt den Formschluss zwischen der Schaltgabel 3 und der Schaltstange 1 her, während das zweite Formschlusselement 8 ganz in die Ausnehmung 11 hinein verschoben ist, so dass es keine Sperrung bewirkt.
Beim Verschieben der Schaltstange 1 mit der Schaltgabel 3 zum Schalten eines Ganges gleitet das zweite Formschlusselement 8 mit seinem abgerundeten Ende in axialer Richtung weg von dem ersten Formschlusselement 4 und entlang der äußeren Umfangsfläche der Schaltgabel 3.

Das ortsfeste Teil 9 kann auch mit einem größeren Abstand zur Schaltgabel 3 angeordnet sein, als es in Fig. 4A und 4B dargestellt ist. Dabei müssen die zweiten Formschlusselemente 8 entsprechend länger ausgebildet und in der Ausnehmung 11 ausreichend geführt sein, um die gewünschte Sperrwirkung zuverlässig zu bewirken.

### Bezugszeichen

- 1: Schaltstange
- 2: Wählstange
- 3: Schaltgabel
- 4: erstes Formschlusselement
- 5: Ringfeder
- 6: Ausnehmung
- 7: Öffnung
- 8: zweites Formschlusselement
- 9: ortsfestes Teil
- 10: Mittelachse
- 11: Ausnehmung
- 12: Funktionsfläche
- 13: Schaltgabel
- 14: erstes Formschlusselement
- 15: Ringfeder
- 16: Ausnehmung
- 20: Aktuator
- 21: Abdichtungen
- 22: Kolben-Zylinder-Einheit
- 23: Druckraum

## Patentansprüche

1. Schaltvorrichtung für die Wähl- und Schaltbetätigung von Mehrstufenschaltgetrieben von Kraftfahrzeugen mit einer entlang einer Mittelachse verschiebbaren, wenigstens zwei Schaltgabein (3, 13) tragenden Schaltstange (1), wobei zur Gangwahl jeweils eine der Schaltgabeln (3, 13) mittels einer Wählstange (2) und ersten Formschlusselementen (4, 14) mit der Schaltstange (1) formschlüssig verbindbar ist, und wobei die Mittelachse (10) der Wählstange in der gleichen Richtung wie die Mittelachse der Schaltstange angeordnet ist, **dadurch gekennzeichnet, dass** die Wählstange (2) koaxial zur Schaltstange (1) angeordnet ist.

2. Schaltvorrichtung nach Anspruch 1, **dadurch gekennzeichnet, dass** die Schaltstange (1) als Hohlwelle ausgebildet ist, und dass die Wählstange (2) in der Hohlwelle dreh- oder schwenkbar um ihre Mittelachse (10) angeordnet ist.

3. Schaltvorrichtung nach Anspruch 1, **dadurch gekennzeichnet, dass** die Schaltstange (1) als Hohlwelle ausgebildet ist, und dass die Wählstange (2) in der Hohlwelle axial verschiebbar angeordnet ist.

4. Schaltvorrichtung nach einem der vorgenannten Ansprüche, **dadurch gekennzeichnet, dass** die Wählstange (2) mit Funktionsflächen (12) versehen ist, die mit den ersten Formschlusselementen (4, 14) zusammenwirken, sodass durch Bewegungen der Wählstange (2) die ersten Formschlusselemente (4, 14) radial verschiebbar sind, und dass so der Formschluss zwischen der Schaltstange (1) und der ausgewählten Schaltgabel (3, 13) über die ersten Formschlusselemente (4,14) herstellbar ist.

5. Schaltvorrichtung nach einem der vorgenannten Ansprüche, **dadurch gekennzeichnet, dass** wenigstens eine Sperrvorrichtung (8, 9) zum Sperren der nicht ausgewählten Schaltgabeln (3, 13) vorgesehen ist.

6. Schaltvorrichtung nach Anspruch 5, **dadurch gekennzeichnet, dass** die Sperrvorrichtung (8, 9) zweite Formschlusselemente (8) vorsieht, wobei mittels der zweiten Formschlusselemente ein Formschluss zwischen der zugehörigen Schaltgabel (3, 13) und einem ortsfesten Teil (9) herstellbar ist.

7. Schaltvorrichtung nach Anspruch 6, **dadurch gekennzeichnet, dass** die zweiten Formschlusselemente (8) durch die Bewegung der Wählstange (2) zwischen einer Sperrposition und einer Mitnahmeposition verschiebbar sind, wobei in der Sperrposition ein Formschluss zwischen der zugehörigen Schaltgabel (3, 13) und dem ortsfesten Teil (9) besteht:

8. Schaltvorrichtung nach einem der vorgenannten Ansprüche, **dadurch gekennzeichnet, dass** ein erster Aktuator (22) zum Ausführen der Schaltbewegung durch Betätigung der Schaltstange (1) und ein zweiter Aktuator (20) zum Ausführen der Wählbewegung durch Betätigung der Wählstange (2) vorgesehen sind.

9. Schaltvorrichtung nach Anspruch 8, **dadurch gekennzeichnet, dass** der erste und der zweite Aktuator (20, 22) im Bereich desselben Endes der Schaltstange (1) angeordnet sind.

10. Schaltvorrichtung nach Anspruch 8, **dadurch gekennzeichnet, dass** der erste Aktuator (20) im Bereich des einen Endes der Schaltstange angeordnet ist und dass der zweite Aktuator (22) im Bereich des anderen Endes der Schaltstange (1) angeordnet ist.

11. Schaltvorrichtung nach einem der Ansprüche 8 bis 10, **dadurch gekennzeichnet, dass** der erste und der zweite Aktuator (20, 22) mit einer elektronischen Steuereinheit signalübertragend verbunden sind.

## Claims

1. Shift device for the selection and shift actuation of multi-stage shift gearboxes of motor vehicles, having a shift rod (1) which is displaceable along a central axis and which bears at least two shift forks (3, 13), wherein for gear selection, in each case one of the shift forks (3, 13) can be connected in a positively locking manner to the shift rod (1) by means of a selector rod (2) and first positive locking elements (4, 14), and wherein the central axis (10) of the selector rod is arranged in the same direction as the central axis of the shift rod, **characterized in that** the selector rod (2) is arranged coaxially with respect to the shift rod (1).

2. Shift device according to Claim 1, **characterized in that** the shift rod (1) is formed as a hollow shaft, and **in that** the selector rod (2) is arranged, so as to be rotatable or pivotable about its central axis (10), in the hollow shaft.

3. Shift device according to Claim 1, **characterized in that** the shift rod (1) is formed as a hollow shaft, and **in that** the selector rod (2) is arranged axially displaceably in the hollow shaft.

4. Shift device according to one of the preceding claims, **characterized in that** the selector rod (2) is provided with functional surfaces (12) which interact with the first positive locking elements (4, 14), such that the first positive locking elements (4, 14) can be displaced radially as a result of movements of the selector rod (2), and **in that** the positive locking can thus be produced between the shift rod (1) and the selected shift fork (3, 13) by means of the first positive locking elements (4, 14).

5. Shift device according to one of the preceding claims, **characterized in that** at least one blocking device (8, 9) is provided for blocking the non-selected shift forks (3, 13).

6. Shift device according to Claim 5, **characterized in that** the blocking device (8, 9) provides second positive locking elements (8), wherein positive locking can be produced between the associated shift fork (3, 13) and a positionally fixed part (9) by means of the second positive locking elements.

7. Shift device according to Claim 6, **characterized in that** the second positive locking elements (8) can be displaced between a blocking position and a driving position as a result of the movement of the selector rod (2), wherein in the blocking position, there is positive locking between the associated shift fork (3, 13) and the positionally fixed part (9).

8. Shift device according to one of the preceding claims, **characterized in that** a first actuator (22) is provided for performing the shift movement by actuating the shift rod (1), and a second actuator (20) is provided for performing the selector movement by actuating the selector rod (2).

9. Shift device according to Claim 8, **characterized in that** the first and second actuators (20, 22) are arranged in the region of the same end of the shift rod (1).

10. Shift device according to Claim 8, **characterized in that** the first actuator (20) is arranged in the region of one end of the shift rod, and **in that** the second actuator (22) is arranged in the region of the other end of the shift rod (1).

11. Shift device according to one of Claims 8 to 10, **characterized in that** the first and second actuators (20, 22) are connected in signal-transmitting fashion to an electronic control unit.

## Revendications

1. Dispositif de changement de vitesse pour l'actionnement de sélection et de changement de vitesse de boîtes de vitesses à plusieurs étages de véhicules automobiles, comprenant une tige de changement de vitesse (1) portant au moins deux fourchettes de changement de vitesse (3, 13) et déplaçable le long d'un axe médian, à chaque fois l'une des fourchettes de changement de vitesse (3, 13) pouvant être connectée par engagement par correspondance géométrique en vue de la sélection de rapport à la tige de changement de vitesse (1) au moyen d'une tige de sélection (2) et de premiers éléments d'engagement par correspondance géométrique (4, 14), et l'axe médian (10) de la tige de sélection étant disposé dans la même direction que l'axe médian de la tige de changement de vitesse, **caractérisé en ce que** la tige de sélection (2) est disposée coaxialement à la tige de changement de vitesse (1).

2. Dispositif de changement de vitesse selon la revendication 1, **caractérisé en ce que** la tige de changement de vitesse (1) est réalisée sous forme d'arbre creux, et **en ce que** la tige de sélection (2) est disposée dans l'arbre creux de manière à pouvoir tourner ou pivoter autour de son axe médian (10).

3. Dispositif de changement de vitesse selon la revendication 1, **caractérisé en ce que** la tige de changement de vitesse (1) est réalisée sous forme d'arbre creux et **en ce que** la tige de sélection (2) est disposée de manière déplaçable axialement dans l'arbre creux.

4. Dispositif de changement de vitesse selon l'une quelconque des revendications précédentes, **caractérisé en ce que** la tige de sélection (2) est pourvue de surfaces fonctionnelles (12) qui coopèrent avec les premiers éléments d'engagement par correspondance géométrique (4, 14), de sorte que par des déplacements de la tige de sélection (2), les premiers éléments d'engagement par correspondance géométrique (4, 14) puissent être déplacés radialement, et **en ce que** l'engagement par correspondance géométrique entre la tige de changement de vitesse (1) et la fourchette de changement de vitesse sélectionnée (3, 13) peut donc être réalisé par le biais des premiers éléments d'engagement par correspondance géométrique (4, 14).

5. Dispositif de changement de vitesse selon l'une quelconque des revendications précédentes, **caractérisé en ce qu'**au moins un dispositif de blocage (8, 9) est prévu pour bloquer les fourchettes de changement de vitesse (3, 13) non sélectionnées.

6. Dispositif de changement de vitesse selon la revendication 5, **caractérisé en ce que** le dispositif de blocage (8, 9) présente deux éléments d'engagement par correspondance géométrique (8), un engagement par correspondance géométrique pouvant être réalisé au moyen des deuxièmes éléments d'engagement par correspondance géométrique entre la fourchette de changement de vitesse associée (3, 13) et une partie fixe (9).

7. Dispositif de changement de vitesse selon la revendication 6, **caractérisé en ce que** les deuxièmes éléments d'engagement par correspondance géométrique (8) peuvent être déplacés par le déplacement de la tige de sélection (2) entre une position bloquée et une position d'entraînement, un engagement par correspondance géométrique entre la fourchette de changement de vitesse associée (3, 13) et la partie fixe (9) étant réalisé dans la position de blocage.

8. Dispositif de changement de vitesse selon l'une quelconque des revendications précédentes, **caractérisé en ce qu'**un premier actionneur (20) est prévu pour effectuer le mouvement de changement de vitesse par actionnement de la tige de changement de vitesse (1), et un deuxième actionneur (22) est prévu pour effectuer le mouvement de sélection par actionnement de la tige de sélection (2).

9. Dispositif de changement de vitesse selon la revendication 8, **caractérisé en ce que** le premier et le deuxième actionneur (20, 22) sont disposés dans la région de la même extrémité de la tige de changement de vitesse (1).

10. Dispositif de changement de vitesse selon la revendication 8, **caractérisé en ce que** le premier actionneur (20) est disposé dans la région d'une extrémité de la tige de changement de vitesse et le deuxième actionneur (22) est disposé dans la région de l'autre extrémité de la tige de changement de vitesse (1).

11. Dispositif de changement de vitesse selon l'une quelconque des revendications 8 à 10, **caractérisé en ce que** le premier et le deuxième actionneur (20, 22) sont connectés par transmission de signaux à une unité de commande électronique.
